# EUROPEAN PATENT APPLICATION

(11) **EP 4 696 590 A1**
(43) Date of publication of application: **18.02.2026**
(21) Application number: 23947666.6
(22) Date of filing: 05.09.2023
(51) Int. Cl.: B62D 21/15

(54) **SHOCK ABSORPTION STRUCTURE FOR VEHICLE BODY**

(30) Priority: 01.08.2023 JP 2023125362
(71) Applicant: Toyoda Iron Works Co., Ltd., Toyota-shi, Aichi 471-8507 (JP)
(72) Inventor: TOCHIGI, Yusuke, Toyota-shi, Aichi 471-8507 (JP)
(74) Representative: Zimmermann, Tankred Klaus
(86) International application number: PCT/JP2023/032385
(87) International publication number: WO 2025/027869

(57) **Abstract**

Provided is a shock absorption structure for a vehicle body, which includes an energy absorption member (20) having a hat-like sectional shape taken along a collision load input direction. A top plate portion (20A) in the hat shape is disposed so as to face the input direction. Each of coupling portions (20D), (20E) of flange portions (20C) and the top plate portion (20A) to a pair of vertical wall portions (20B) has a bent shape. The dimension of the bent shape in the direction of extension of each flange portion (20C) is set such that the first dimension L1 of the bent shape on the flange portion (20C) side is a predetermined value or more, and is equal to or larger than the second dimension L2 of the bent shape on the top plate portion (20A) side.

## Description

### TECHNICAL FIELD

The present invention relates to a shock absorption structure for a vehicle body.

### BACKGROUND ART

For example, as disclosed in Japanese Patent No. 7099552 (Patent 552), there has been known a structure in which an energy absorption member B is disposed in a rocker (generally also referred to as a side sill) A having a closed sectional structure to absorb an impact at the time of side collision (Fig. 20 of the present disclosure). At the time of the side collision, the energy absorption member B receives a collision load in the direction of an arrow, and is gradually deformed as in Figs. 21 and 22 to absorb collision energy and protect an occupant. In addition, a battery (not shown) or the like inside the rocker A in a vehicle width direction is protected.

The energy absorption member B disclosed in Patent 552 includes a pair of vertical walls C extending substantially along the direction of the collision load, and is formed with grooves D recessed in directions facing each other. When receiving the collision load, the vertical walls C are deformed in the directions facing each other with the grooves D as a trigger for deformation, and the vertical walls C come into contact with each other, so that an energy absorption amount is increased as compared with a case where no energy absorption member B is provided.

### SUMMARY OF INVENTION

### PROBLEMS TO BE SOLVED BY INVENTION

Among the components disclosed in Patent 552, the pair of vertical walls C is easily deformed at an initial stage of the collision due to the grooves D. For this reason, there is a problem that the load received by the energy absorption member B at the initial stage of the collision decreases.

An object of the present disclosure is to generate a moment in a direction of a pair of vertical walls approaching each other in response to a collision load in a shock absorption structure for a vehicle body, which includes an energy absorption member having the pair of vertical walls extending along a collision load input direction. With this moment, the pair of vertical walls is deformed so as to come into contact with each other in response to the collision load without forming a bent shape serving as a trigger for deformation, such as a groove, in the pair of vertical walls. Thus, the object is to suppress a decrease in the load received by the energy absorption member at an initial stage of the collision.

### SOLUTION TO PROBLEMS

One aspect of the present disclosure is a shock absorption structure for a vehicle body, which includes an energy absorption member having a hat-like sectional shape taken along a collision load input direction and in which the energy absorption member includes a top plate portion, a pair of vertical wall portions, and a pair of flange portions, the top plate portion is disposed such that a plate surface thereof faces the input direction, the pair of flange portions is fixed to one fixing member that receives a collision load, each of coupling portions of the flange portions and the top plate portion to the pair of vertical wall portions has a bent shape, a first dimension which is the dimension of the bent shape of each coupling portion of each flange portion in the direction of extension of each flange portion is equal to or larger than a second dimension which is the dimension of the bent shape of each coupling portion of the top plate portion in the direction of extension of the top plate portion, and the first dimension is a predetermined value or more.

In another embodiment of the present disclosure, the pair of vertical wall portions is disposed in parallel to each other.

In still another embodiment of the present disclosure, the ratio of a fourth dimension which is a separation distance between the top plate portion and the fixing member to a third dimension which is a separation distance between the pair of vertical wall portions is 1:7 to 1:2.5.

In still another embodiment of the present disclosure, the energy absorption member is formed of two members joined at the top plate portion in the hat shape.

In still another embodiment of the present disclosure, the pair of vertical wall portions includes a plurality of beads formed of recesses or projections extending along a direction in which the top plate portion and each flange portion face each other, along the direction of extension of the energy absorption member.

### BRIEF DESCRIPTION OF DRAWINGS

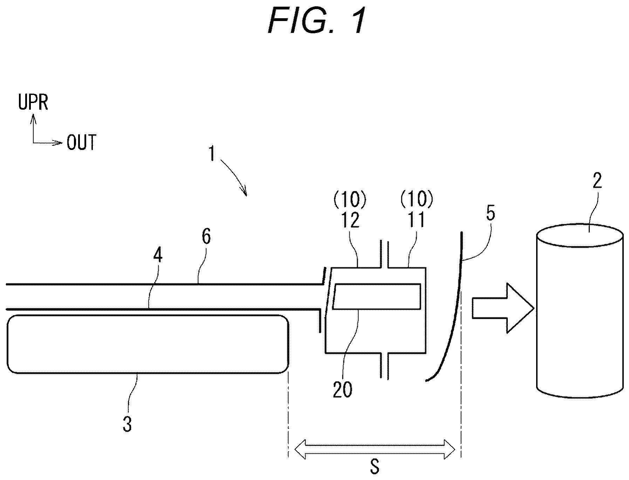

Fig. 1 is a schematic view showing the configuration of one embodiment of the present disclosure.

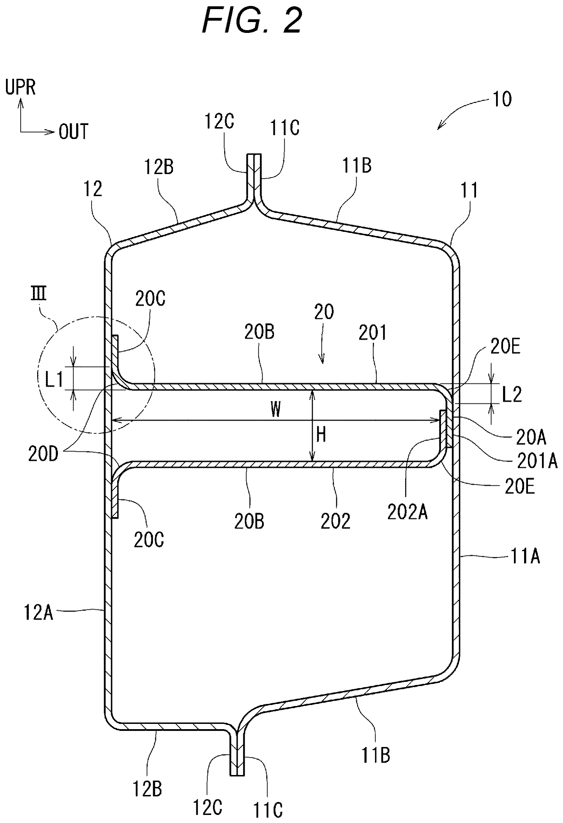

Fig. 2 is a vertical sectional view of a rocker of the one embodiment of the present disclosure.

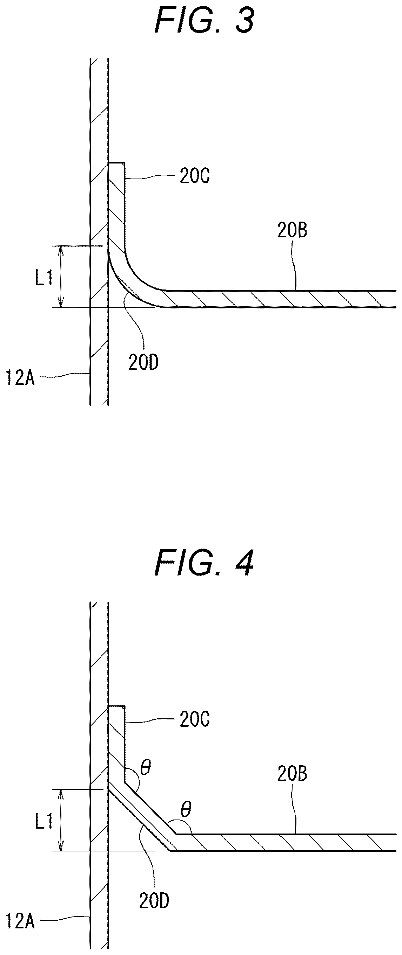

Fig. 3 is an enlarged view of a portion III in Fig. 2.
Fig. 4 is an enlarged view of the portion III in Fig. 2, and shows a modification of Fig. 3.

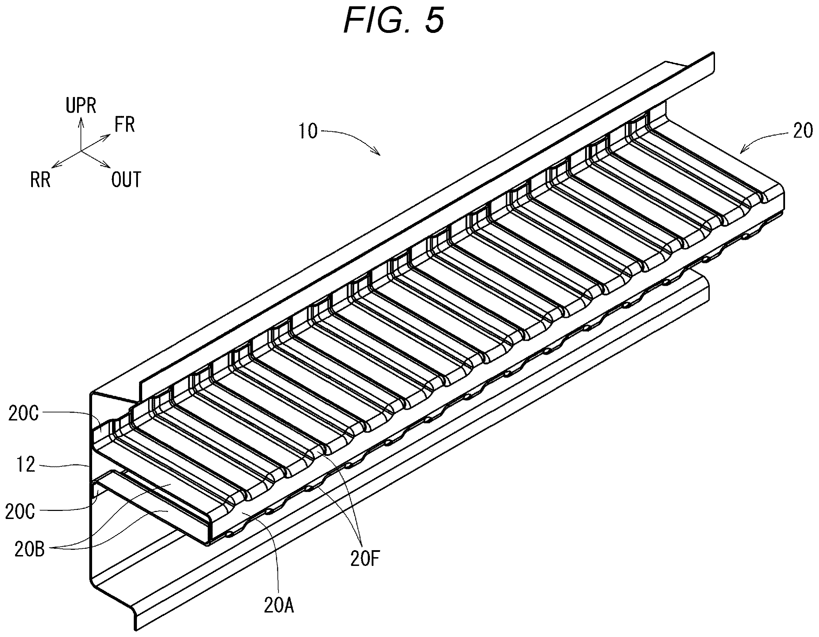

Fig. 5 is a perspective view of an energy absorption member of the one embodiment of the present disclosure.

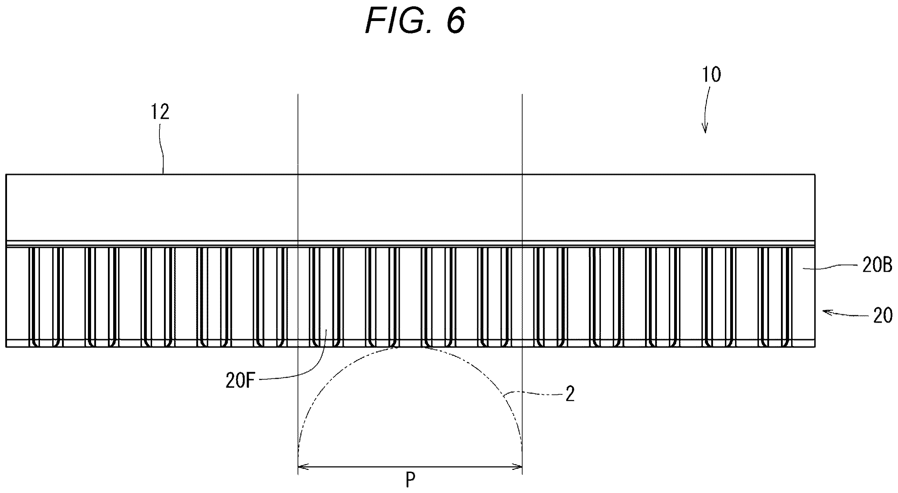

Fig. 6 is a plan view of the energy absorption member of Fig. 5.

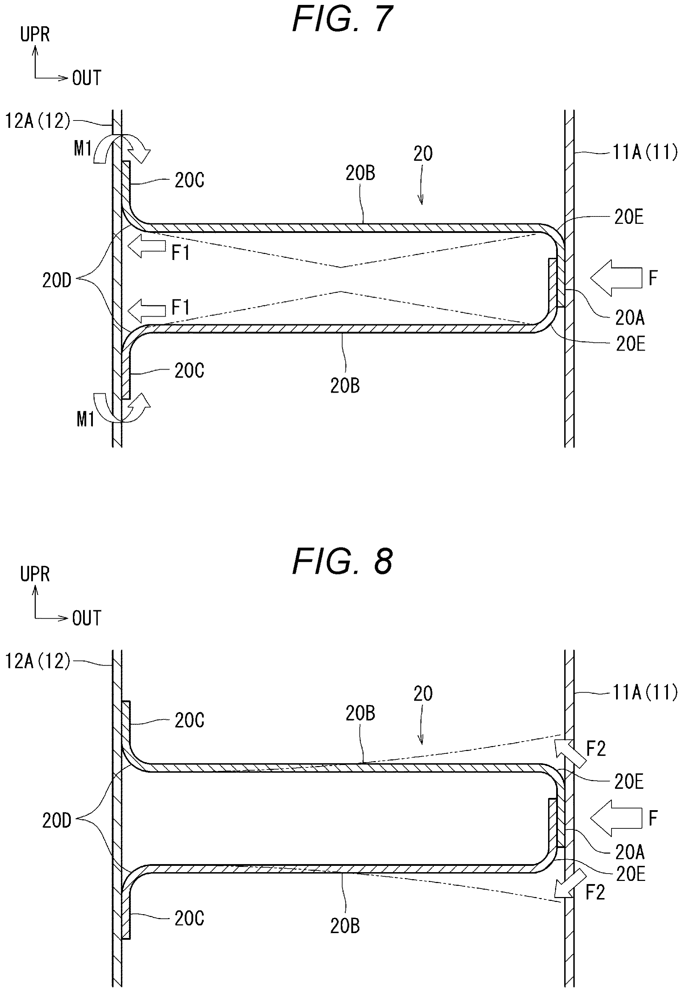

Fig. 7 is a view for describing a moment generated on a flange portion side when the energy absorption member of Fig. 5 receives a collision load.
Fig. 8 is a view for describing a force generated on a top plate portion side when the energy absorption member of Fig. 5 receives the collision load.

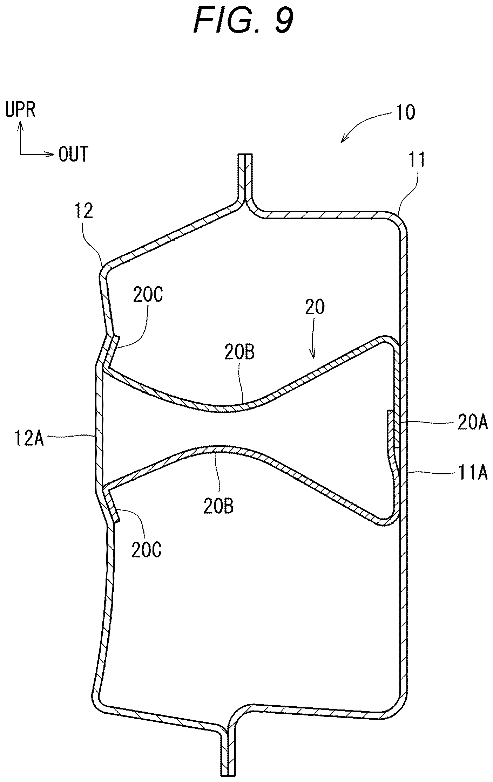

Fig. 9 is a schematic view for describing deformation at an initial stage of collision when the energy absorption member of Fig. 5 receives the collision load.

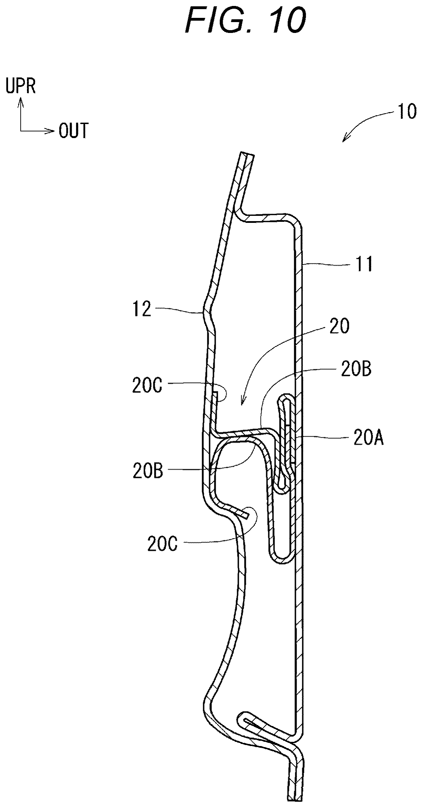

Fig. 10 is a schematic view for describing deformation at a latter stage of the collision when the energy absorption member of Fig. 5 receives the collision load.

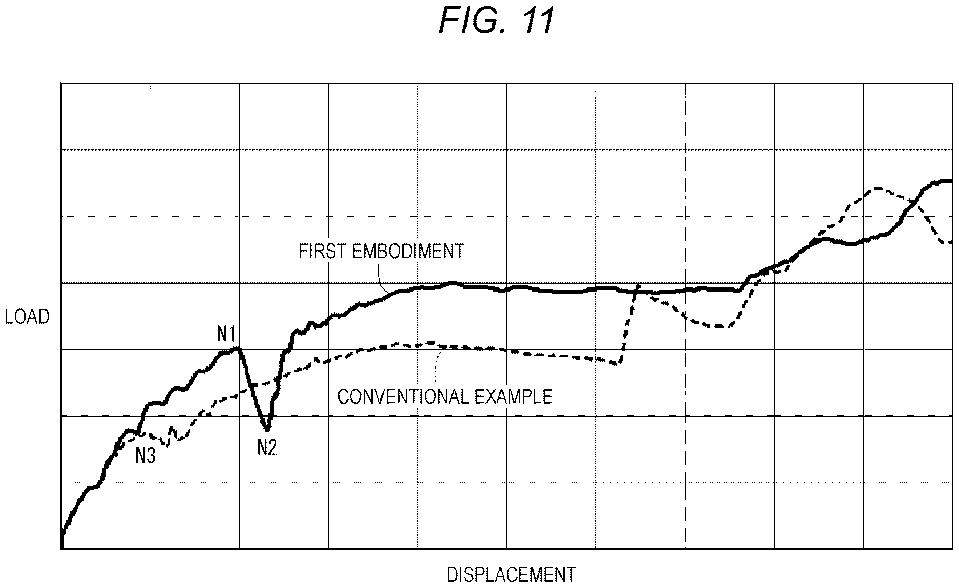

Fig. 11 is a graph showing, as deformation characteristics, load-displacement characteristics when the energy absorption member of Fig. 5 receives the collision load.

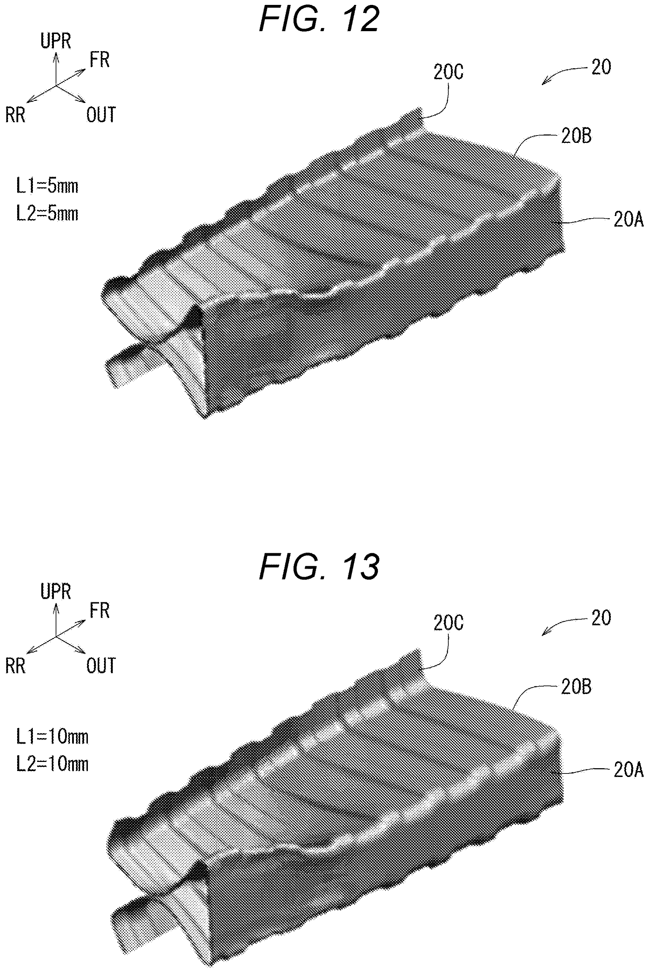

Fig. 12 is a CAE image showing a simulation result of the deformation at the initial stage of the collision when the energy absorption member of Fig. 5 receives the collision load, and shows the state of the deformation in a case where the first dimension of a bent shape of each of coupling portions of the flange portion and the top plate portion to a vertical wall portion is 5 mm and the second dimension thereof is 5 mm.
Fig. 13 is a CAE image similar to that of Figs. 12, and shows the state of the deformation in a case where the first dimension is 10 mm and the second dimension is 10 mm.

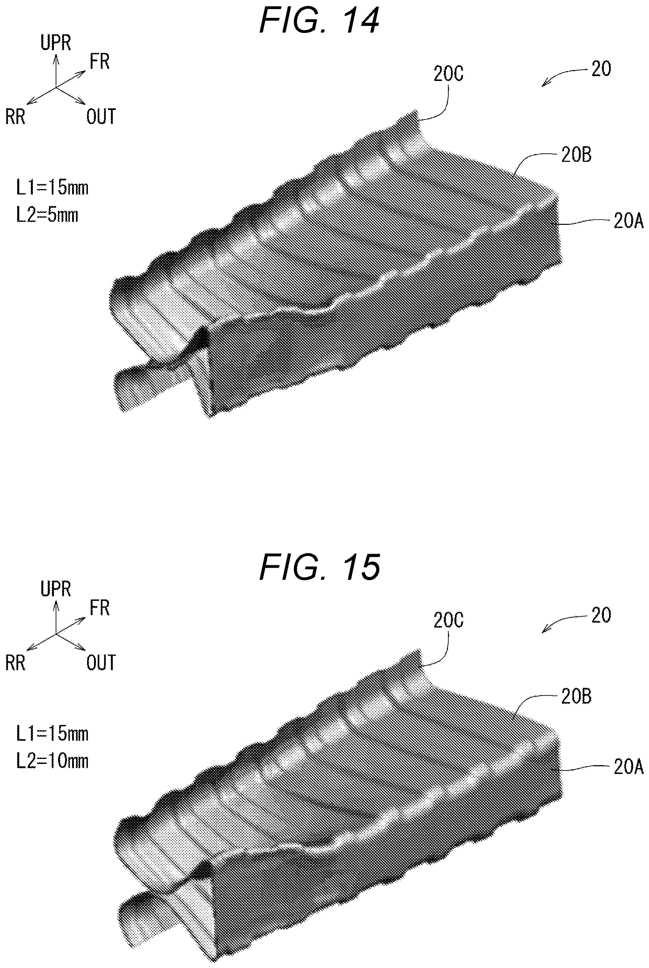

Fig. 14 is a CAE image similar to that of Figs. 12, and shows the state of the deformation in a case where the first dimension is 15 mm and the second dimension is 5 mm.
Fig. 15 is a CAE image similar to that of Figs. 12, and shows the state of the deformation in a case where the first dimension is 15 mm and the second dimension is 10 mm.

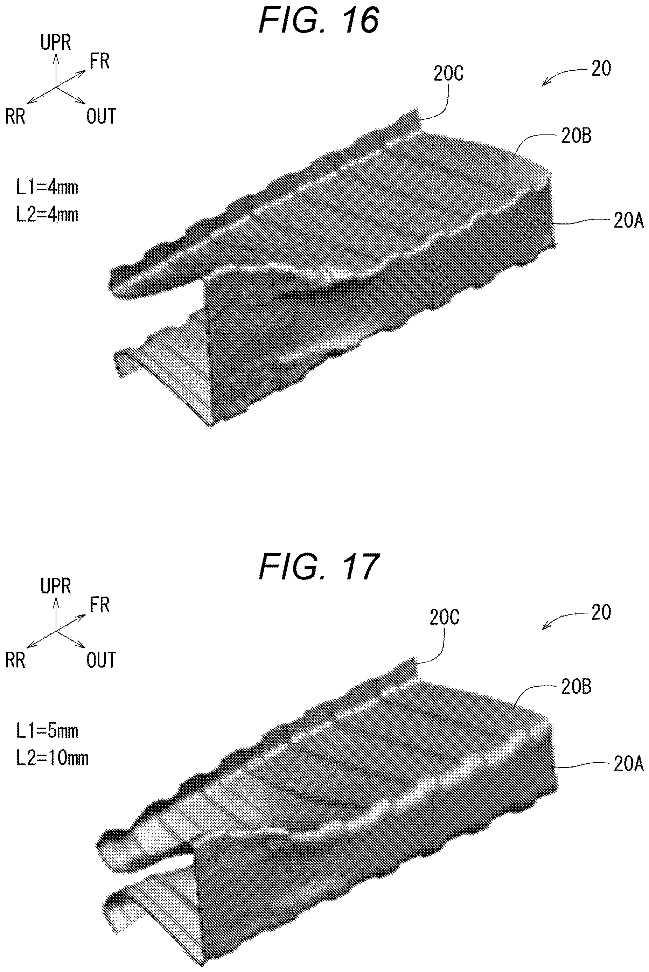

Fig. 16 is a CAE image similar to that of Figs. 12, and shows the state of the deformation in a case where the first dimension is 4 mm and the second dimension is 4 mm.
Fig. 17 is a CAE image similar to that of Figs. 12, and shows the state of the deformation in a case where the first dimension is 5 mm and the second dimension is 10 mm.

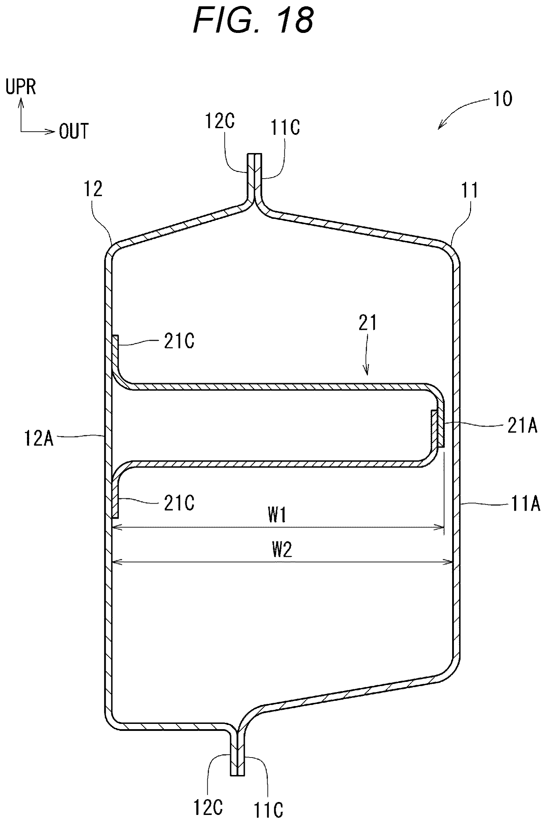

Fig. 18 is a vertical sectional view of a rocker of another embodiment of the present disclosure.

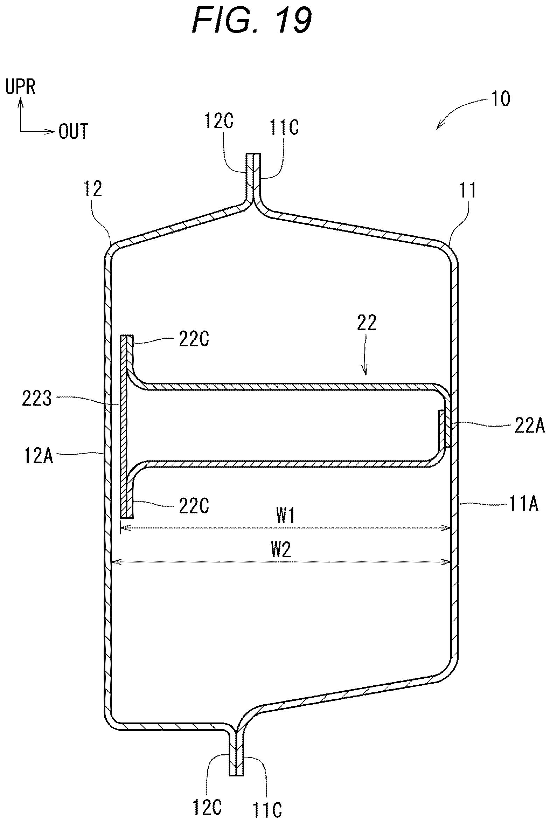

Fig. 19 is a vertical sectional view of a rocker of still another embodiment of the present disclosure.

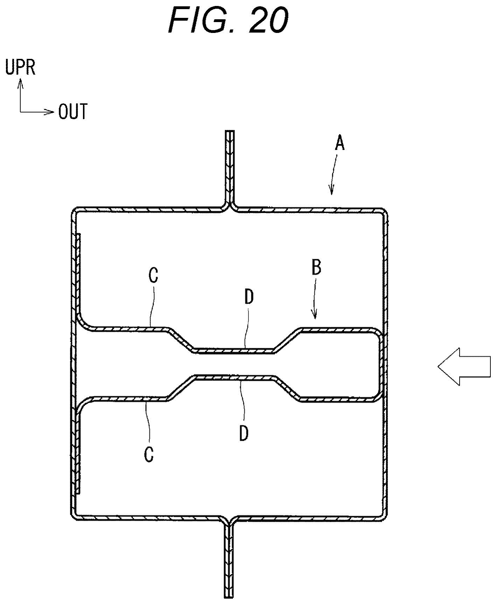

Fig. 20 is a vertical sectional view of a rocker of a conventional example of the present disclosure.

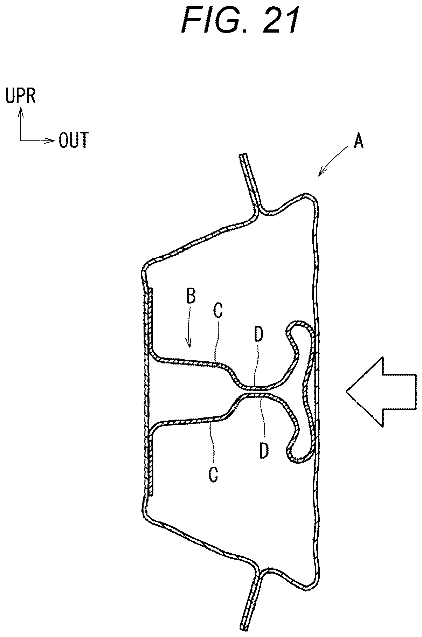

Fig. 21 is a schematic view for describing deformation at an initial stage of collision when the rocker of Fig. 20 receives a collision load.

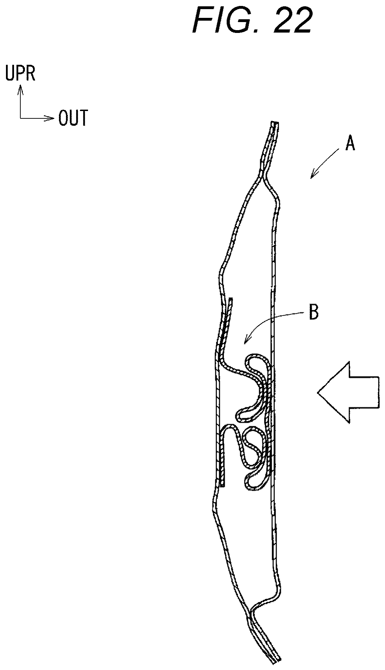

Fig. 22 is a schematic view for describing deformation at a latter stage of the collision when the rocker of Fig. 20 receives the collision load.

### DESCRIPTION OF EMBODIMENTS

### <Overall Configuration of One Embodiment>

Hereinafter, an embodiment of a shock absorption structure according to the present disclosure will be described with reference to the drawings. The embodiment of Fig. 1 is a shock absorption structure 1 for a battery upon side collision of an electric vehicle. This is one embodiment, and the present invention is not limited to the electric vehicle and can be applied to a shock absorption structure against collision with each part of various vehicles. Note that as indications of directions shown in each figure, UPR indicates an upper side, OUT indicates an outside as viewed from the inside of a cabin of an automobile, FR indicates the front side of the automobile, and RR indicates the rear side of the automobile. Thus, the direction indicated by UPR is a vehicle body upper-lower direction, the direction indicated by OUT is a vehicle body width direction, and the direction indicated by FR and RR is a vehicle body front-rear direction.

Fig. 1 schematically shows a vertical sectional configuration of a main part of an overall configuration of the shock absorption structure 1 to which the one embodiment is applied. Fig. 1 is the state of a pole side collision test in which a pole 2 is disposed. In the present embodiment, a battery 3 of the electric vehicle is disposed below a floor 4 of the electric vehicle. A rocker 10 forming a framework of a lower portion of the vehicle body of the automobile is disposed on an outer side portion of the floor 4. Further, a side door 5 (normal front door) is disposed outside the rocker 10. The pole 2 in the pole side collision test is further disposed outside the side door 5. In the present embodiment, when the side door 5 collides with the pole 2, energy in the collision is absorbed within an area S between the side door 5 and the battery 3 to protect the battery 3. In particular, the energy is absorbed in the rocker 10. A cross member 6 is provided on the floor 4 so as to extend in the vehicle body width direction. The cross member 6 includes a plurality of cross members 6 provided in the vehicle body front-rear direction to reinforce the floor 4 against a side collision load.

In the present embodiment, an energy absorption member 20 is disposed over an entire area in the rocker 10 in the vehicle body front-rear direction. As a result, the energy of the side collision is absorbed at the position of the rocker 10. The rocker 10 has an outer rocker member 11 disposed outside and an inner rocker member 12 disposed inside. The outer rocker member 11 and the inner rocker member 12 are formed such that the sectional shape thereof taken along the vehicle body width direction which is a direction of inputting the collision load to the rocker 10 is a so-called hat shape. The outer rocker member 11 and the inner rocker member 12 have a closed sectional structure in which the open sides thereof overlap with each other. As a result, the rocker 10 has a hollow structure. This hollow structure extends in the vehicle body front-rear direction. Note that as the material of the energy absorption member 20, a steel material (for example, a steel plate having a tensile strength of 590 MPa or more) suitable for performing an energy absorption action by deformation due to crushing is used. Other materials such as aluminum can also be used.

Fig. 2 shows a detailed structure of the rocker 10. Each of the outer rocker member 11 and the inner rocker member 12 includes a top plate portion 11A, 12A, a vertical wall portion 11B, 12B, and a flange portion 11C, 12C. The outer rocker member 11 and the inner rocker member 12 are combined such that the open sides of the hat shapes face each other, and are joined such that the pair of flange portions 11C, 12C overlaps with each other.

In the closed sectional structure formed by the outer rocker member 11 and the inner rocker member 12, the energy absorption member 20 extending in the vehicle body front-rear direction is disposed as shown in Fig. 5. Similarly to the outer rocker member 11 and the inner rocker member 12, the energy absorption member 20 is also formed such that the sectional shape thereof taken along the vehicle body width direction which is the direction of inputting the collision load to the rocker 10 is a hat shape. Thus, the energy absorption member 20 includes a top plate portion 20A, a pair of vertical wall portions 20B, and a pair of flange portions 20C. The pair of vertical wall portions 20B is disposed in parallel to each other. The energy absorption member 20 may be formed by press-molding one steel plate, but here, is formed in such a manner that an upper member 201 and a lower member 202 obtained by dividing the energy absorption member 20 having the hat-like sectional shape into two members in the upper-lower direction are joined by welding. The joining by welding is performed on the top plate portion 20A. Thus, outer end portions of the upper member 201 and the lower member 202 forming the top plate portion 20A include joint portions 201A, 202A joined with the surfaces thereof facing each other. As described above, the energy absorption member 20 is divided into the two upper and lower members, so that manufacturing can be facilitated. A reason is that in a case where the energy absorption member 20 is formed by press-molding one steel plate, it is necessary to perform the press-molding using a press mold adapted to a shape in which the width dimension (fourth dimension) W of the energy absorption member 20 is sufficiently larger than the upper-lower dimension (third dimension) H. On the other hand, in a case where the energy absorption member 20 is divided into the two upper and lower members, one energy absorption member 20 can be easily formed by individually press-molding the upper member 201 and the lower member 202 and then joining these members.

The ratio of the width dimension (separation distance between the top plate portion 20A and the top plate portion 12A of the inner rocker member 12) W to the upper-lower dimension (separation distance between the vertical wall portions 20B) H of the energy absorption member 20 is about 1:7 to 1:2.5. The ratio of the width dimension W to the upper-lower dimension H of the energy absorption member 20 may be about 1:5.5 to 1:3. With this ratio, when the energy absorption member 20 receives the collision load, the pair of vertical wall portions 20B of the energy absorption member 20 is not deformed so as to bend in the same direction, and in addition, it is possible to deform the pair of vertical wall portions 20B in directions facing each other such that the vertical wall portions 20B contact each other and then crush the vertical wall portions 20B as described later.

In the energy absorption member 20, the top plate portion 20A is disposed so as to face the collision load input direction, and contacts the inner wall surface of the top plate portion 11A of the outer rocker member 11. The top plate portion 20A of the energy absorption member 20 is joined to the top plate portion 11A of the outer rocker member 11 by single-sided welding or by an adhesive. Moreover, the pair of flange portions 20C is joined to the inner wall surface of the top plate portion 12A of the inner rocker member 12 by welding. Thus, the top plate portion 12A of the inner rocker member 12 forms a fixing member that receives the collision load applied to each flange portion 20C.

The joint positions of the pair of flange portions 20C to the inner rocker member 12 are positions corresponding to the outside the cross member 6 on the floor 4 in the width direction as in Fig. 1. With this arrangement, it is possible to efficiently reduce influence of an impact due to the side collision on the floor 4 by the energy absorption member 20. Moreover, in the energy absorption member 20, the pair of vertical wall portions 20B is disposed in parallel. Thus, there is an advantage that the position of the energy absorption member 20 can be easily adjusted to a portion where the impact is to be absorbed as compared with the case of an inclined shape in which an interval between the pair of vertical wall portions 20B is larger on the flange portion 20C side than on the top plate portion 20A side.

A coupling portion 20E connecting the top plate portion 20A and each vertical wall portion 20B and a coupling portion 20D connecting each vertical wall portion 20B and each flange portion 20C are formed in a bent shape having an R-surface portion or an inclined surface portion. Fig. 3 is an enlarged view showing an example where the bent shape of the coupling portion 20D has the R-surface portion. Moreover, Fig. 4 is an enlarged view showing an example where the bent shape of the coupling portion 20D has the inclined surface portion. In the bent shape of Fig. 3, the R-surface portion has an arc surface. In the bent shape of Fig. 4, the inclined surface portion has an inclined surface. Here, the inclined surface is formed such that the angle θ of the inclined surface of the coupling portion 20D with respect to each of the vertical wall portion 20B and the flange portion 20C is 135 degrees. Although Figs. 3 and 4 show the enlarged views of the coupling portion 20D, the coupling portion 20E has a similar structure. In the bent shape of each of the coupling portion 20D and the coupling portion 20E, a dimension in the direction (upper-lower direction) of extension of the flange portion 20C is set such that the first dimension L1 of each coupling portion 20D is a predetermined value (for example, 5 mm) or more, and is the second dimension L2 (see Fig. 2) of the coupling portion 20E or more.

As shown in Figs. 5 and 6, each vertical wall portion 20B of the energy absorption member 20 is formed with a plurality of beads 20F. Figs. 5 and 6 show the energy absorption member 20 joined to the inner rocker member 12 in a state of the outer rocker member 11 being removed. The bead 20F is formed of a recess or a projection extending along a direction in which the top plate portion 20A and the flange portion 20C face each other. In Figs. 5 and 6, the beads 20F are formed of projections linearly bulging in a mountain shape from the upper and lower surfaces of the vertical wall portions 20B. In the case of the present embodiment, as in Fig. 6, it is desirable that four or more beads 20F are included in an area P corresponding to the diameter of the pole 2. The diameter of the pole in the pole side collision test is 254 mm. The vertical wall portion 20B is formed with the beads 20F in this manner, so that it is possible to increase the deformation strength of the vertical wall portion 20B when the energy absorption member 20 receives the collision load from the top plate portion 20A toward the flange portion 20C due to the collision with the pole 2.

### <Features and Effects of One Embodiment>

Fig. 7 shows the state of force transmission and moment generation when the energy absorption member 20 receives the collision load from the direction of an arrow F. When the energy absorption member 20 receives the collision load from the direction of the arrow F, the pair of vertical wall portions 20B applies a force F1 toward the top plate portion 12A of the inner rocker member 12 through the flange portions 20C. As described above, the coupling portion 20D is provided between the vertical wall portion 20B and the flange portion 20C. Thus, the force F1 in the vertical wall portion 20B generates such a moment that the tip end side (side apart from the coupling portion 20D) of the flange portion 20C lifts as indicated by an arrow M1. This moment is a force bringing the top plate portion 20A sides of the vertical wall portions 20B close to each other. That is, this force is a force deforming each vertical wall portion 20B as indicated by a two-dot chain line in Fig. 7.

Fig. 8 shows the state of a force F2 generated on the top plate portion 20A side when the energy absorption member 20 receives the collision load from the direction of the arrow F. When the energy absorption member 20 receives the collision load from the direction of the arrow F, the top plate portion 20A generates the force F2 expanding the top plate portion 20A sides of the vertical wall portions 20B in the upper-lower direction as indicated by two-dot chain lines while expanding the area thereof in the upper-lower direction.

Here, as described above, the dimension L1 of the coupling portion 20D is the dimension L2 of the coupling portion 20E or more, and the dimension L1 is set to the predetermined value or more. Thus, as indicated by the two-dot chain lines in Fig. 8, an effect of bringing the vertical wall portions 20B close to each other by a moment M1 is larger than an effect of bringing the vertical wall portions 20B apart from each other by the force F2, as indicated by the two-dot chain lines in Fig. 7. As a result, the energy absorption member 20 deforms the vicinities of center portions of the pair of vertical wall portions 20B in the width direction thereof such that these portions approach each other, as indicated by the two-dot chain lines in Fig. 7. As a result, the pair of vertical wall portions 20B of the energy absorption member 20 is deformed so as to approach each other at an initial stage of the collision as shown in Fig. 9 by an interaction between the moment M1 and the force F2. Thereafter, the deformation further progresses, the pair of vertical wall portions 20B comes into contact with each other, and in a latter stage of the collision, the rocker 10 and the energy absorption member 20 are crushed as in Fig. 10. As a result, the collision energy is absorbed by the rocker 10 including the energy absorption member 20.

Fig. 11 shows load-displacement characteristics (F-S characteristics) by the rocker 10 of the present invention. In Fig. 11, a solid line indicates the characteristics of the rocker 10 of the one embodiment of the present disclosure, and a broken line indicates the characteristics of a rocker A of a conventional example in Fig. 20. In the rocker 10 of the present disclosure indicated by the solid line, the pair of vertical wall portions 20B is sharply bent so as to approach each other at a position indicated by N1. The pair of vertical wall portions 20B contacts each other at a position indicated by N2. The load drops relatively greatly at the position N2. As compared with the rocker A of the conventional example in Fig. 20 as indicated by the broken line, the load of the rocker 10 of the present disclosure temporarily decreases as compared with the rocker A at the position indicated by N2, but is larger than that of the rocker A as a whole. In the rocker A of the conventional example, a groove D serving as a trigger for deforming a vertical wall C is formed as in Fig. 20. Thus, as indicated by N3 in Fig. 11, the vertical wall C is deformed with a small load, and the load received by an energy absorption member B is small as a whole. Consequently, it can be seen that the rocker 10 has a larger energy absorption amount than that of the rocker A.

Figs. 12 to 17 show results of CAE analysis performed for various first dimensions L1 and second dimensions L2 as in Table 1 in the above-described embodiment.

**[Table 1]**

| | Fig. 12 | Fig. 13 | Fig. 14 | Fig. 15 | Fig. 16 | Fig. 17 |
|---|---|---|---|---|---|---|
| L1 | 5mm | 10 mm | 15 mm | 15 mm | 4 mm | 5 mm |
| L2 | 5 mm | 10 mm | 5 mm | 10 mm | 4 mm | 10 mm |
| Evaluation | ○ | ○ | ○ | ○ | × | × |

The cases of Figs. 12 to 15 satisfy such a condition that the first dimension L1 is the predetermined value (5 mm) or more and is the second dimension L2 or more. In the cases of Figs. 12 to 15, the pair of vertical wall portions 20B of the energy absorption member 20 having received the collision load can be brought into contact with each other. On the other hand, the cases of Figs. 16 and 17 do not satisfy the above-described conditions. In the cases of Figs. 16 and 17, the pair of vertical wall portions 20B cannot be brought into contact with each other. This result shows that the first dimension L1 needs to be 5 mm or more and L1 ≥ L2 needs to be satisfied in order to deform the pair of vertical wall portions 20B of the energy absorption member 20 such that these portions contact each other without the groove D as in the above-described conventional example.

### <Another Embodiment>

Fig. 18 shows another embodiment. In the other embodiment, a top plate portion 21A of an energy absorption member 21 is disposed apart from the top plate portion 11A of the outer rocker member 11 without contacting such a top plate portion. Other configurations of the other embodiment are the same as those of the one embodiment, and the overlapping description of the same parts will be omitted.

In the other embodiment, the energy absorption member 21 placed in the space of the rocker 10 has a smaller size in the width direction than that of the energy absorption member 20 in the one embodiment. In the energy absorption member 21, a pair of flange portions 21C is joined and fixed to the top plate portion 12A of the inner rocker member 12 by welding. The top plate portion 21A of the energy absorption member 21 is disposed slightly apart from the top plate portion 11A of the outer rocker member 11 without contacting such a top plate portion.

As described above, in the other embodiment, since the top plate portion 21A of the energy absorption member 21 does not contact the top plate portion 11A of the outer rocker member 11 and is apart from such a top plate portion, it is possible to reduce a defective product due to a manufacturing error. That is, it is possible to prevent a problem that it is difficult to join the flange portion 11C of the outer rocker member 11 and the flange portion 12C of the inner rocker member 12 due to such a manufacturing error that the dimension W1 of the energy absorption member 21 in the width direction is larger than the dimension W2 of the internal space of the rocker 10 in the width direction. Thus, in the other embodiment, it is possible to improve a yield at the time of manufacturing and to reduce a manufacturing cost. Note that the collision energy absorption amount in the other embodiment is reduced by an amount by which the top plate portion 21A of the energy absorption member 21 is apart from the top plate portion 11A of the outer rocker member 11 without contacting such a top plate portion. However, a decrease in the collision energy absorption amount can be suppressed by a decrease in the separation distance.

### <Still Another Embodiment>

Fig. 19 shows still another embodiment. In the still another embodiment, a pair of flange portions 22C of an energy absorption member 22 is joined and fixed to a fixing member 223 by welding, and the fixing member 223 is disposed apart from the top plate portion 12A of the inner rocker member 12 without contacting such a top plate portion. Other configurations of the still another embodiment are the same as those of the one embodiment, and the overlapping description of the same parts will be omitted.

In the still another embodiment, the energy absorption member 22 placed in the space of the rocker 10 has a smaller size in the width direction than that of the energy absorption member 20 in the one embodiment. In the energy absorption member 22, a top plate portion 22A is joined and fixed to the top plate portion 11A of the outer rocker member 11 by welding. The fixing member 223 joined to the flange portions 22C of the energy absorption member 22 is disposed slightly apart from the top plate portion 12A of the inner rocker member 12 without contacting such a top plate portion.

In this manner, in the still another embodiment, the fixing member 223 joined to the pair of flange portions 22C of the energy absorption member 22 is apart from the top plate portion 12A of the inner rocker member 12 without contacting such a top plate portion. Therefore, it is possible to reduce a defective product due to a manufacturing error. That is, it is possible to prevent a problem that it is difficult to join the flange portion 11C of the outer rocker member 11 and the flange portion 12C of the inner rocker member 12 due to such a manufacturing error that the dimension W1 of the energy absorption member 22 in the width direction is larger than the dimension W2 of the internal space of the rocker 10 in the width direction. Thus, in the still another embodiment, it is possible to improve a yield at the time of manufacturing and to reduce a manufacturing cost as compared with the one embodiment. Note that the collision energy absorption amount in the still another embodiment is reduced by an amount by which the fixing member 223 joined to the flange portions 22C of the energy absorption member 22 is apart from the top plate portion 12A of the inner rocker member 12 without contacting such a top plate portion. However, a decrease in the collision energy absorption amount can be suppressed by a decrease in the separation distance.

### <Other Embodiments>

Although specific embodiments have been described above, the present disclosure is not limited to the appearances and configurations thereof, and various modifications, additions, and deletions can be made. For example, in the above-described embodiments, the example where the shock absorption structure is applied to the rocker of the vehicle body has been described, but the present disclosure can also be applied to a center pillar, a bumper, and the like other than the rocker. Moreover, in the above-described embodiment, the pair of vertical wall portions is disposed in parallel to each other, but the pair of vertical wall portions may have such an inclined shape that the flange portion side is separated more greatly than the top plate portion side.

Finally, the features and effects of other embodiments in the above-described "SOLUTION TO PROBLEMS" will be additionally described.

According to the other embodiments of the present disclosure, the pair of vertical wall portions is disposed in parallel to each other. Thus, as compared with a case where the pair of vertical wall portions has such an inclined shape that the flange portion side is separated more greatly than the top plate portion side, it is easy to dispose the energy absorption member with respect to the portion where the collision load is to be absorbed most in the collision area of the vehicle body.

According to the other embodiments of the present disclosure, the ratio of the fourth dimension to the third dimension in the hat shape is appropriately set. Thus, when the energy absorption member receives the collision load, the pair of vertical wall portions of the energy absorption member is not deformed so as to bend in the same direction, and in addition, the pair of vertical wall portions is deformed in the directions facing each other and comes into contact with each other. As a result, it is possible to achieve intended deformation followed by crushing.

In order for the energy absorption member having received the collision load to undergo the intended deformation, the hat shape of the energy absorption member needs to have the fourth dimension larger than the third dimension to some extent. Thus, in order to press-mold the energy absorption member, an elongated mold is required. According to the other embodiments of the present disclosure, the hat-shaped energy absorption member is formed of the two members joined at the top plate portion. Thus, the elongated mold is not required to press-mold the energy absorption member, and the energy absorption member can be easily manufactured.

According to the other embodiments of the present disclosure, the deformation strength of the vertical wall portion receiving the collision load from the top plate portion toward the flange portion of the energy absorption member can be appropriately increased by the beads. Thus, the energy absorption amount of the energy absorption member can be appropriately controlled. In addition, the plate thickness of the energy absorption member can be reduced by an amount reinforced by the beads, and the energy absorption member can be reduced in weight.

The various embodiments described above in detail with reference to the accompanying drawings are representative examples of the present invention, and do not limit the present invention. The detailed description is intended to teach those skilled in the art to make, use, and/or implement various aspects of the present teaching, and does not limit the scope of the present invention. Further, each additional feature and teaching described above may be applied and/or used separately or together with other features and teachings to provide an improved vehicle body shock absorption structure and/or method for manufacturing and using the shock absorption structure.

## Claims

1. A shock absorption structure for a vehicle body, comprising:
an energy absorption member having a hat-like sectional shape taken along a collision load input direction, wherein
the energy absorption member includes a top plate portion, a pair of vertical wall portions, and a pair of flange portions,
the top plate portion is disposed such that a plate surface thereof faces the input direction,
the pair of flange portions is fixed to one fixing member that receives a collision load, each of coupling portions of the flange portions and the top plate portion to the pair of vertical wall portions has a bent shape, and
a first dimension which is a dimension of the bent shape of each coupling portion of each flange portion in a direction of extension of each flange portion is equal to or larger than a second dimension which is a dimension of the bent shape of each coupling portion of the top plate portion in a direction of extension of the top plate portion, and the first dimension is a predetermined value or more.

2. The shock absorption structure for the vehicle body according to claim 1, wherein the pair of vertical wall portions is disposed in parallel to each other.

3. The shock absorption structure for the vehicle body according to claim 2, wherein
a ratio of a fourth dimension which is a separation distance between the top plate portion and the fixing member to a third dimension which is a separation distance between the pair of vertical wall portions is 1:7 to 1:2.5.

4. The shock absorption structure for the vehicle body according to any one of claims 1 to 3, wherein
the energy absorption member is formed of two members joined at the top plate portion in the hat shape.

5. The shock absorption structure for the vehicle body according to any one of claims 1 to 3, wherein
the pair of vertical wall portions includes a plurality of beads formed of recesses or projections extending along a direction in which the top plate portion and each flange portion face each other, along a direction of extension of the energy absorption member.
